# EUROPEAN PATENT SPECIFICATION

(11) **EP 3 985 827 B1**
(45) Date of publication and mention of the grant of the patent: **17.07.2024**
(21) Application number: 20202596.1
(22) Date of filing: 19.10.2020
(51) Int. Cl.: H02J 7/00

(54) **METHOD AND DEVICE FOR CHARGING A RECHARGEABLE BATTERY**
VERFAHREN UND VORRICHTUNG ZUM LADEN EINER WIEDERAUFLADBAREN BATTERIE
PROCÉDÉ ET DISPOSITIF DE CHARGE DE BATTERIE RECHARGEABLE

(43) Date of publication of application: 20.04.2022
(73) Proprietor: Vestel Elektronik Sanayi ve Ticaret A.S., 45030 Manisa (TR)
(72) Inventor: ÇUBUKÇU, Baran, 45030 Manisa (TR)
(74) Representative: Page White Farrer

(56) References cited:
- US-A1- 2017 195 770
- US-A1- 2019 006 855
- US-A1- 2020 076 203
- US-A1- 2020 303 938

## Description

### Technical Field

The present disclosure relates to a method and device for charging a rechargeable battery of a speaker device.

### Background

Wireless speaker devices are often powered from a battery, which is typically a rechargeable battery. The rechargeable battery is typically provided as part of the speaker device, such as being located internally in a main housing or casing or the like of the speaker device. The rechargeable battery needs to be recharged from time to time. Charging devices may be provided as a "charging case" (also known as a "battery case" or similar) or as a standalone power supply. A standalone power supply is typically connected to a source of mains power, using for example a cable and plug connection. A charging case may also be connected to a source of mains power, using for example a cable and plug connection or wirelessly to a "charging mat" or the like using for example inductive power transfer.

US2019006855A1 discloses a loudspeaker battery charging device that comprises a three-position selector that establishes one of a first, second, or third charging mode for charging a battery of a loudspeaker. The first charging mode pertains to an off state of the loudspeaker. The second charging mode pertains to an on state of the loudspeaker. The third charging mode pertains to a fast charge state of the loudspeaker.

US2020076203A1 discloses a method for wirelessly charging, a plurality of rechargeable devices, wherein at least one rechargeable device is an ear level device, such as a hearing aid. A charging profile of one or more rechargeable devices is determined based on information regarding current battery status.

US2020303938A1 discloses a battery management system that is configured to derive a predicted battery demand based on observed usage patterns to predictively charge the battery to healthily accommodate the predicted battery demand.

US2017195770A1 discloses a charging case for rechargeable wireless earphones. The earphones are configured such that they may be used even when charging or when the earphone system battery is depleted.

### Summary

According to a first aspect of the present invention, there is provided a method of charging a rechargeable battery of a speaker device, the method comprising:
receiving, at a charging device, data relating to a volume level that is set for playback of audio by the speaker device;
storing, at the charging device, said data relating to the volume level that is set for playback of audio by the speaker device; and
operating the charging device to cause charging of the battery of the speaker device in accordance with the stored data relating to the volume level.

This allows for the fact that the charge of the battery is consumed at a greater rate when the playback volume is higher. This enables one or more of faster or more economic charging of the battery and/or can help extend the useful life of the battery. The speaker devices may be wireless, that is, are wirelessly connected in use to receive audio signals from an audio playback device.

The volume level may be for example a typical volume level that is used in practice for that speaker device or an average of the volume level that is used over time for that speaker device.

In an example, operating the charging device comprises:
charging the battery of the speaker device with the charging device delivering electric energy to the battery at a rate that is a function of the volume level of the speaker device.

For example, the charging rate may increase monotonically with an increase of the volume level. That is, in this example, electrical energy is delivered by the charging device with a relatively higher rate (higher power) if the volume level of the speaker device is relatively higher, and is delivered at a relatively lower rate (lower power) if the volume level of the speaker device is relatively lower.

In an example, the charging device is arranged to charge the batteries of two speaker devices simultaneously, with the charging device delivering electric energy to the batteries of the speaker devices at respective rates that are a function of the volume level of the respective speaker devices.

That is, in this example, the charging device can charge (at least) two speaker devices, and electrical energy is delivered by the charging device at different rates (different power levels) to the speaker devices if the volume level of the respective speaker devices is different.

In an example, the rate of delivery of electric power to the batteries of each of the speaker devices is set at the charging device such that the batteries are fully charged within substantially the same time period.

In an example, operating the charging device comprises:
charging the battery of the speaker device with the charging device delivering electric energy such that the battery is charged to a proportion of full charge of the battery that is a function of the volume level of the speaker device.

For example, the proportion of full charge may increase monotonically with an increase of the volume level. That is, in this example, electrical energy is delivered by the charging device such that the battery is charged to for example full capacity if the volume level of the speaker device is at a high or maximum level, and such that the battery is charged to a lower proportion or percentage of full capacity if the volume level of the speaker device is at a lower or minimum level. This may be achieved by varying the charging time for the speaker devices accordingly.

In an example, the charging device is in communication with two speaker devices simultaneously, and operating the charging device comprises:
causing electrical energy to be passed from the battery of a first of the speaker devices to the battery of the second of the speaker devices in the case that the volume level of the first speaker device is at a lower level than the volume level of the second speaker device.

This example recognises that because the second speaker device is used with a higher volume level, it will typically consume electrical energy at a greater rate than the first speaker device. In this example, therefore, the first speaker device is caused to "share" its charge with the second speaker device by passing some of its stored electrical energy to the second speaker device. The electrical energy may for example be passed via suitable connections provided by the charging device.

According to a second aspect of the present invention, there is provided a charging device for causing charging of a rechargeable battery of a speaker device, the charging device comprising:
data storage for storing data relating to a volume level that is set for playback of audio by a speaker device, the charging device being configured to receive said data;
the charging device being constructed and arranged to cause charging of the battery of said speaker device in accordance with the stored data relating to the volume level.

The data storage may include non-volatile memory in which the data relating to a volume level may be stored. This allows the data relating to a volume level to be "permanently stored", as for example a one-off set-up exercise (though the data may be updated from time to time by the user if and when necessary). Alternatively or additionally, the data relating to a volume level may be stored in a volatile memory of the charging device each time the charging device is used.

In an example, the charging device is constructed and arranged to charge the battery of said speaker device by delivering electric energy to the battery of said speaker device at a rate that that is a function of the volume level of said speaker device.

In an example, the charging device is constructed and arranged to charge the batteries of two speaker devices simultaneously, the charging device being configured to deliver electric energy to the batteries of each of said speaker devices at respective rates that are a function of the volume level of the respective speaker devices.

In an example, the charging device is configured such that the rate of delivery of electric power to the batteries of each of said speaker devices is set such that said batteries are fully charged within substantially the same time period.

In an example, the charging device is configured to charge the battery of said speaker device by delivering electric energy such that the battery is charged to a proportion of full charge of the battery that is a function of the volume level of said speaker device.

In an example, the charging device is configured to cause electrical energy to be passed from the battery of a first of said speaker devices to the battery of the second of said speaker devices in the case that the volume level of said first speaker device is at a lower level than the volume level of said second speaker device.

In an example, the charging device comprises an interface that is configured to receive said data relating to a volume level from a media player.

The media player is typically one that is in communication with the or each speaker device during normal usage of the or each speaker device by the user for play back of audio. Volume levels for play back are often set at the media player, and the media player may pass the or each volume level to the charging device, via for example a wired or wireless connection. The media player may send test signals to the speaker device to facilitate the setting of the desired volume level by the user.

In an example, the charging device comprises:
an audio output interface for transmitting audio signals to a said speaker device for play back of audio by a said speaker device;
an interface that is configured to receive an input from a user to set a volume level for play back of the audio by a said speaker device;
wherein said data relating to a volume level corresponds to the volume level received at the interface.

In an example, the charging device comprises an interface that is configured to receive said data relating to a volume level as a manual input by a user.

### Brief Description of the Drawings

To assist understanding of the present disclosure and to show how embodiments may be put into effect, reference is made by way of example to the accompanying drawings in which:
Figure 1 shows schematically a pair of wireless speaker devices in wireless communication with a media player; and
Figure 2 shows schematically a charging device.

### Detailed Description

Whilst the terms are used somewhat inconsistently in the art, the following terms will be used herein to mean the following, unless the context requires otherwise.

Herein, the term "loudspeaker" is in general used to describe an electroacoustic transducer which converts an electrical audio signal into a corresponding sound. The loudspeaker may be of the "dynamic cone speaker" type having a diaphragm or cone which is driven to move by a voice coil. In other examples, the loudspeaker may be of another type, including for example a magnetostatic speaker, an electrostatic speaker, etc.

The term "speaker device" is used herein as a generic term for any type of device that includes a loudspeaker, which is a device for outputting audio for users to hear. The speaker device may only be for outputting audio and may not include any arrangement that acts as a source of audio signals (such as a radio, MP3 player, CD player, etc.) The speaker device may be for example a freestanding loudspeaker (e.g. for shelf mounting or floor standing, etc.) or a personal "headphone" type (for wearing by a user).

The term "headphone" as used herein is used as a generic term for a device which is worn on or around the head to locate loudspeakers over or in a user's ear and for a device which is mounted directly within or to the user's ear. The term headphone covers for example, on the one hand, "circumaural headphones" and "supra-aural headphones" and, on the other hand, "ear-fitting headphones".

The terms "circumaural" and "supra-aural" headphones are used herein to mean headphones that have a band or strap or the like which has a (typically small) loudspeaker at each end and which are worn over the top of or around the side of the user's head to hold the loudspeakers in place in or over the user's ears.

The term "ear-fitting headphone" is used herein to mean a headphone that does not use a band or strap or the like to hold the loudspeakers in place in or over the user's ear. Ear-fitting headphones as referred to herein are individual loudspeakers that are connected by a wired or wireless connection to each other and/or to a media player. Ear-fitting headphones as used herein include "earphones" and "earbuds". The term "earphones" (or "in-ear headphones") as used herein to mean headphones that are inserted directly into the ear canal. The term "earbuds" is used herein to mean headphones that are placed into the (outer) ear and rest outside of the ear canal, typically being held in place by the concha ridge at the centre of the outer ear. Ear-fitting headphones, including earphones, in-ear headphones, earbuds, etc. are often small and discreet.

In general, speaker devices may be wired or wireless, that is, in use may be connected to a source of audio signals by a wired or wireless connection. Some speaker devices use locally powered loudspeakers, that is, have an amplifier and optionally other circuity for receiving audio signals from an audio source and amplifying an processing those signals, etc. before passing the amplified signals to the speaker drivers to output audio for the user. Such speaker devices may have a local source of electrical energy for the amplifier and other circuitry. Such a source may be a rechargeable battery.

The present disclosure relates to charging a rechargeable battery of a wireless speaker device. The present disclosure has particular application to charging a rechargeable battery of a wireless speaker device of the headphone type, including most particularly, though not exclusively, of the ear-fitting headphone type. In an example, data relating to a volume level that is set for playback of audio by the wireless speaker device is received at a charging device. The charging device is operated to cause charging of the battery of the wireless speaker device in accordance with the data relating to the volume level. This allows for the fact that the charge of the battery is consumed at a greater rate when the playback volume is higher. This enables one or more of faster or more economic charging of the battery and/or can help extend the useful life of the battery.

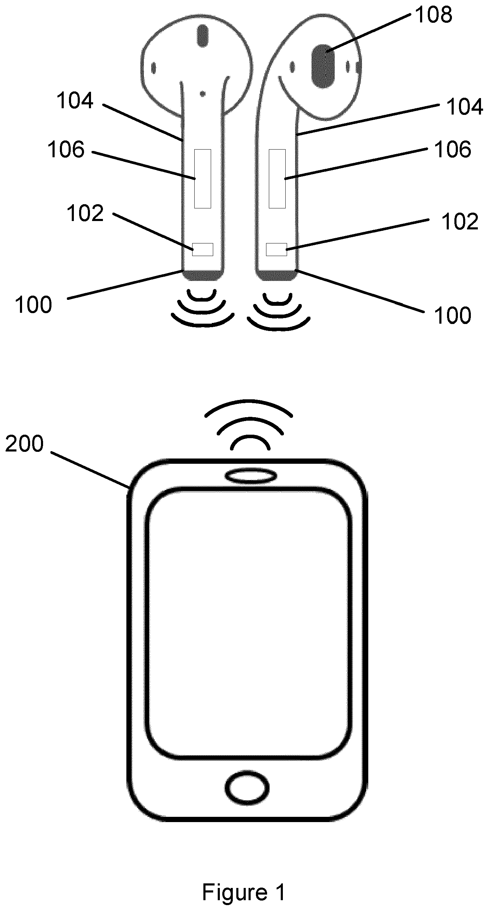

Referring now to Figure 1, this shows schematically a pair of speaker devices 100 in communication with a media player 200. The media player 200 may be any device that can output audio signals to be passed ultimately to one or more speaker devices 100 to output audio. Especially, though not exclusively, in the case of headphones, the media player 200 may be for example a cellular phone (including a so-called "smart phone"), an MP3 player, a tablet or notebook computer, some other audio playback device such as a radio, a CD player, etc. The speaker devices 100 in this example are each wirelessly connected to the media player 200 to receive audio signals wirelessly from the media player 200, as indicated schematically. The wireless technology commonly used at present for such transfer is Bluetooth, but another suitable wireless technology may be used. Alternatively or additionally, the speaker devices 100 may be connected to the media player 200 and/or each other by wired connections (not shown).

Each speaker device 100 has a rechargeable battery 102. In this example, the rechargeable battery 102 is located internally of a main outer casing 104 of the speaker device 100. Each speaker device 100 further has circuitry 106 for receiving audio signals from the media player 200 and processing the signals, including for example amplifying the signals, before passing the signals to a speaker driver 108 for output of audio for the user.

The speaker devices 100 of this example are of the ear-fitting headphone type, to be fitted in use in the ears of the user. Examples of the present disclosure may however also be applied to recharging of batteries of speaker devices of the headphone type or indeed to speaker devices of other types, including standalone (e.g. shelf-mounted or floor-mounted) speaker devices. Either way, the speaker devices 100 are "handed" in the sense that one speaker device 100 is intended for use with the left ear and the other speaker device 100 is intended for use with the right ear, so that for example stereo audio can be played back correctly. In the case of speaker devices 100 of the ear-fitting headphone type as shown by way of example in Figure 1, the speaker devices 100 are shaped appropriately to fit the left and right ears accordingly, and the overall shapes the speaker devices 100 are effectively mirror images of each other.

Known charging devices for recharging the rechargeable batteries of speaker devices include so-called "charging cases" or similar. In such devices, the speaker devices, which are typically of the ear-fitting headphone type, are fitted into the charging case to make a (typically wired) connection with power delivery circuitry in the charging case which passes electrical energy to the batteries. The charging case is connected to a source of mains power, using for example a cable and plug connection or wirelessly via a "charging mat" or the like using for example inductive power transfer. Known charging devices typically provide the electrical energy to the batteries of the speaker devices at the same rate for the two batteries (i.e. with the same rate of energy transfer or power) and typically charge the batteries for the same amount of time. This can lead to overcharging of one or both of the batteries, which can damage the batteries as is known per se. Some arrangements for power delivery are known, including for example according to more recent USB (universal serial bus) standards, in which the charging device and the device being charged exchange control signals to "negotiate" the rate of charge and when charging should cease. Other arrangements are known in which the device being charged instructs the charging device what power delivery rate should be used. However, in each case, this is based only on the current state of charge of the battery being charged and/or the power handling characteristics of that battery and/or the associated circuitry. Further, it may not always be possible or convenient to use such known technology for charging of speaker devices, whether for technical reasons and/or for commercial reasons, including for example the availability and cost of licences. Alternative arrangements for controlling the charging are therefore desirable.

Furthermore, the speaker devices, such as the speaker devices 100 discussed herein, may be operated by the user at different volume levels. For example, the user may be hard of hearing (i.e. the user has a hearing impediment) in one ear but has no hearing difficulty or only slightly impaired hearing in the other ear. In such cases, the user will set the volume level for play back to be greater for one of the speaker devices 100 than for the other speaker device 100. Other situations exist in which the paly back volume for one speaker device 100 is greater than for the other. For example, one user may be using one speaker device 100 whilst another user is using the other speaker device 100 so that both can hear the same audio from a shared media player. In such cases, the circuitry 106, including particularly the amplifier, for the speaker device 100 having the higher volume level will consume electrical energy faster than the circuitry 106 for the other, lower volume speaker device 100, and will therefore deplete the energy stored in its associated battery 102 faster. In another example, the user may only be using one speaker device at a time, or at least predominantly only uses one speaker device 100 at a time. In such cases, there are a number of drawbacks associated with charging the two batteries with the same power delivery and/or for the same amount of time, as will be discussed further below.

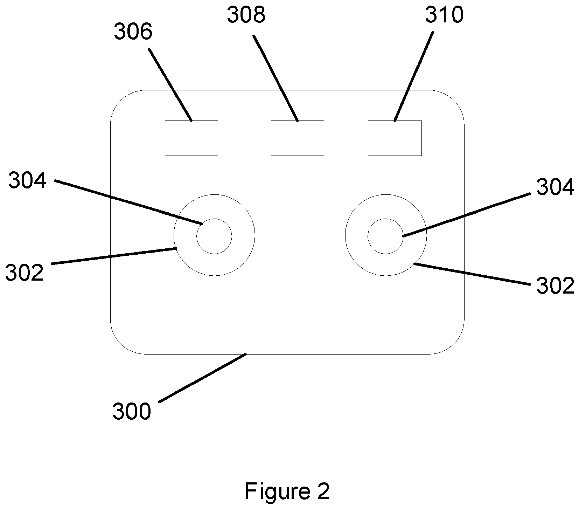

Referring now to Figure 2, this shows schematically an example of a charging device 300, viewed from above. The charging device 300 is illustrated as a charging case, though the charging device 300 may be of another type, including for example a standalone power supply.

The charging device 300 of this example has two recesses 302 each sized to receive a speaker device 100 which is inserted into the recess 302 when charging is required. At the lower end of each recess 302 is provided a power delivery interface 304 for passing electrical energy from the charging device 300 to the speaker device 100 when the speaker device 100 is received in the recess 302. The delivery interfaces 304 and the speaker devices 100 may be arranged to pass and receive electrical energy wirelessly or via direct electrical contact. The charging device 300 has a processor or circuity 306 for controlling operation of the charging device 300 as will be discussed. The charging device 300 further has data storage 308 for storing data. The charging device 300 further has one or more interfaces 310 via which the charging device 300 can receive data relating to the volume levels set for the respective speaker devices 100, again as will be further discussed. The charging device 300 itself may have a battery (not shown and which may or may not be rechargeable) for storing electrical energy to be transferred to the speaker device 100, and/or may be arranged to receive mains electrical power using for example a cable and plug connection to a mains outlet or wirelessly from a "charging mat" or the like using for example inductive power transfer.

As mentioned, data relating to a volume level that is set for playback of audio by the or each wireless speaker device 100 is received at the charging device 300. The charging device 300 is operated to cause charging of the battery 102 of the or each wireless speaker device 100 in accordance with the data relating to the volume level. This allows for the fact that the charge of the battery is consumed at a greater rate when the playback volume is higher.

As a preliminary step then, the data relating to the volume level of the or each wireless speaker device 100 is acquired by the charging device 300. A number of options for this are possible. The charging device 300 may be constructed and arranged such that only one of these options is available, or such that two or more or all of these options are available and the user can select whichever one is convenient or practical at any particular time and/or given the technical nature of the speaker devices 100 and/or media player 200 being used.

As a first example, the charging device 300 comprises an interface 310 that is configured to receive said data relating to a volume level from a media player. The media player may be the media player 200 that is being used, or has been used, to provide audio signals to the speaker devices 100.

The user may for example have set the volume levels for the speaker devices 100 at the media player 200 during normal usage of the media player 200, and the media player may store data relating to those previously used volume levels. The media player 200 may process that data so as to store for example an average or median value for the volume levels, which may be an average or median value over some suitable preceding time period (such as over the last few hours, the last few days, etc.).

Alternatively or additionally, the media player 200 may be configured and operated to send "test" signals for play back by the two speaker devices 100 as a type of calibration. For example, the media player 200 can be operated so as to transmit audio signals to a first of the speaker devices 100 initially at a zero or low volume and then gradually increase the volume. The user can then indicate when the audio can be first heard and/or is at a desired volume, and data relating to that volume level is then stored at the media player 200. This is then repeated for the second speaker device 100. In practice, for a user with a (greater) hearing impediment in one ear, the set volume levels will be different, even though the user may be perceiving the loudness of audio that is being played back by the two speaker devices 100 to be the same. The user can indicate when the volume is such that the audio can be heard or is at a desired level by for example touching a touch interface on the speaker devices 100 and the speaker devices 100 then transmit corresponding data to the media player 200, and/or by touching a touch interface on the media player 200.

In any event, the media player 200 has some data relating to the volume levels used by the two speaker devices 100. That data can be passed by the media player 200 to the charging device 300, via the interface 310. Most conveniently, especially given that currently some media players already communicate with charging cases or the like using Bluetooth, the data can also be passed using Bluetooth. Alternatively or additionally, another wireless technology may be used, and/or a wired connection between the media player 200 and the charging device 300 may be used for the data transfer.

As a second example, the charging device 300 may get the data relating to the volume levels used by the two speaker devices 100 without using the media player 200.

For example, the charging device 300 may be configured and operated to send test signals for play back by the two speaker devices 100 as a type of calibration in the same manner as described for the first example above using the media player 200. Likewise, the user can indicate when the volume is such that the audio can be heard or is at a desired level by for example touching a touch interface on the speaker devices 100 and the speaker devices 100 then transmit corresponding data to the charging device 300, and/or by touching a touch interface on the charging device 300.

As a third example, the charging device 300 may get the data relating to the volume levels used by the two speaker devices 100 as a direct input of data by the user. In this example, the user can enter the typical or normal preferred volume levels directly via the interface 310 which is in the form of a touch screen or which has manual input buttons, etc.

Other examples are possible.

Further, this obtaining of the data relating to the volume levels by the charging device 300 may be carried out each time that the charging device 300 is used to cause charging of the batteries 102. That is, the data relating to the volume levels is effectively refreshed for each usage, and only needs to be stored temporarily in for example volatile memory 308 of the charging device 300. As another example, the data relating to the volume levels may be stored "permanently" in non-volatile memory 308 of the charging device 300. The data in this example may be stored initially, on first usage of the charging device 300, as a "one-off". The charging device 300 may nevertheless be arranged to provide the user with the option to update the data. As another variation, the charging device 300 may be arranged to communicate with the speaker devices 100 so as to be able to recognise the speaker devices 100. If the charging device 300 recognises the particular speaker devices 100, it may use data that has already been stored. The charging device 300 may further store data for several speaker devices 100, to allow for the fact that a number of users may share the charging device 300 to charge their own speaker devices 100 or the user may have several sets of speaker devices 100. As another variation of this, if the charging device 300 does not recognise the speaker devices 100, it may prompt the user to enter the data, and/or begin the test/calibration process described above, and/or prompt the media player 200 to provide the data (either from its own known usage of the speaker devices 100 or following the test/calibration process described above). As yet another option, the charging device 300 may require that the data be updated from time to time, such as once every month, every 3 months, etc.

Having obtained the data relating to the volume levels used by the speaker devices 100, a number of options for recharging the speaker devices 100 by the charging device 300 are possible. The charging device 300 may apply one of these options depending on for example one or more of the volume level used by a particular speaker device 100, the volume levels used by two speaker devices 100, a difference between the volume levels used by two speaker devices 100, etc. In some examples, in addition to charging being based on the volume levels, charging may additionally be based on the current state of charge of one or both speaker devices 100.

To understand the relevant criteria better, the table below gives some numerical examples of volume levels that may be used by the speaker devices 100 and the associated energy usage of the batteries 102, as well as the maximum energy storage capacity of the batteries 102. In this case, the examples are given for a user who has hearing loss in each ear. It will be understood that the numerical values given are for arbitrary units and are only given for the purpose of illustration.

| Speaker Device | Hearing Loss of User | Volume Level | Hourlv Used Energy | Max Speaker DeviceBattery Capacity | Total Usage AvailableBetween Charges |
|---|---|---|---|---|---|
| Left | 50% | 60 | 10x | 50x | 50x / 10x = 5 hours |
| Right | 10% | 30 | 5x | 50x | 50x / 5x = 10 hours |

This shows that in this illustrative example, the user has a greater hearing loss in the left ear and therefore sets the volume level for that ear to be greater. Accordingly, the left speaker device 100 consumes its stored electrical energy faster than the right speaker device 100. In this illustrative example, the maximum battery charge of the left ear speaker device 100 would only last for 5 hours whereas the maximum battery charge of the right ear speaker device 100 would last for 10 hours.

Accordingly, and following the illustrative example above, the (battery 102 of the) left speaker device 100 needs to be charged more than the (battery 102 of the) right speaker device 100. A number of options for this will now be discussed. It will be noted throughout that this is always based on at least the volume level that is set for the speaker device 100 or the speaker devices 100. In each case, the charging device 300 may store data that relates the charging rate and/or total charge time to the volume levels. This data may be stored as for example a look-up table and may be stored in non-volatile data storage 308.

As a first option, the left speaker device 100 is charged at a rate that is greater than the charging rate of the right speaker device 100. For example, the charging device 300 delivers greater power to the left speaker device 100 than to the right speaker device 100. The rate of energy being provided, i.e. the power, may be adjusted by adjusting one or both of the current and voltage that is delivered. The power supplied to the speaker devices 100 may be in proportion to the energy consumption, which in turn is related to the volume levels as explained. Following the numerical example above, electrical energy may be delivered to the left speaker device 100 at twice the power as for the right speaker device 100. In this way, the two speaker devices 100 will both be fully charged within the same time period. This is convenient for the user. It is also noted that if the user removes the speaker devices 100 from the charging device 300 before the respective batteries are fully charged, the two speaker devices 100 will still have the same available usage time, which again is convenient for the user. Further, in the case that the charging device 300 itself is battery-powered, but may not have sufficient stored energy to charge both speaker devices 100 fully, this means that both speaker devices 100 will be charged such that they will have the same usage time, meaning that one battery 102 will not inconveniently be drained before the other when used by the user. That is, the batteries 102 of the speaker devices 100 can be charged optimally given the amount of energy that is available for charging.

As a second option, the or each speaker device 100 is charged by the charging device 300 for a period time such that the battery 102 is charged to a proportion of full charge of the battery 102 that is a function of the volume level of the speaker device 102. This may be achieved by varying the charging time for the speaker devices 102 accordingly, that is, as a function of the volume level of the speaker device 102. Following the numerical example above, electrical energy may be delivered to the left speaker device 100 at the same rate but for twice as long as for the right speaker device 100. Charging by the charging device 300 may cease when the left speaker device 102 is fully charged. Again following the numerical example above, the right speaker device 100 may only be 50% charged. In this way, the two speaker devices 100 will both receive a charge that is such that each speaker device 100 has the same usage time. An advantage of this is that the speaker device 100 that is used at a lower volume does not have its battery 102 always charged to its maximum capacity. This can help to extend that useful life of that battery 102, meaning for example that a user only needs to replace that battery 102 less frequently than would occur otherwise.. Further, again in the case that the charging device 300 itself is battery-powered, but may not have sufficient stored energy to charge both speaker devices 100 fully, this means that both speaker devices 100 will be charged such that they will have the same usage time.

These first and second options may be combined somewhat, so that for example one speaker device 100 is charged with a greater power delivery and for longer than for the other speaker device 100, with suitable combinations of variations of the power and charging times being employed.

As a third option, the charging device 300 may cause electrical energy from the battery 102 of the speaker device 102 that is used at a low volume level to be passed to the battery 102 of the speaker device 102 that is used at a higher volume level. The charging device 300 in this example provides a suitable wired connection to allow the electrical energy to be passed between the batteries 102. The charging device 300 in this example does not need to provide the electrical energy itself. Instead, the batteries 102 of the speaker devices 100 share their stored energy. This may be of most use when the charging device 300 does not have access to electrical energy, such as a mains power supply or, if it has its own battery, that battery has discharged. The amount of electrical energy passed from one speaker device 100 is again a function of the volume levels used, which again is related to the power consumption by the two speaker devices 100. For example, following the numerical example above, the left speaker device 100 uses electrical energy at twice the rate of the right speaker device 100. Assume each was initially fully charged. At the time that the battery 102 of the left speaker device 100 is fully discharged, the battery 102 of the right speaker device 100 will be at 50% capacity. In such a case, the charging device 300 causes 2/3 of the charge from the battery 102 of the right speaker device 100 to be passed to the battery 102 of the left speaker device 100. In that way, each speaker device 100 has the correct amount of charge such that each will provide the same usage time, for the volume levels used.

Accordingly, according to the present disclosure, the batteries 102 of speaker devices 100 are charged according to actual usage of the speaker devices 100, particularly in view of different volume levels that are used in practice for the speaker devices. According to various examples, the batteries can be recharged so that each speaker device 100 can be used for the same period of time in a way that one or more of reduces overall charging time, reduces the total energy required, extends the battery life, and optimally uses available stored electrical charge at the charging device and/or in the batteries of the speaker devices.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

## Claims

1. A method of charging a rechargeable battery (102) of a speaker device (100), the method comprising:
receiving, at a charging device (300), data relating to a volume level that is set for playback of audio by the speaker device (100);
storing, at the charging device (300), said data relating to the volume level that is set for playback of audio by the speaker device (100); and
operating the charging device (300) to cause charging of the battery (102) of the speaker device (100) in accordance with the stored data relating to the volume level.

2. A method according to claim 1, wherein operating the charging device (300) comprises:
charging the battery (102) of the speaker device (100) with the charging device (300) delivering electric energy to the battery (102) at a rate that is a function of the volume level of the speaker device (100).

3. A method according to claim 2, wherein the charging device (300) is arranged to charge the batteries (102) of two speaker devices (100) simultaneously, with the charging device (300) delivering electric energy to the batteries (102) of the speaker devices (100) at respective rates that are a function of the volume level of the respective speaker devices (100).

4. A method according to claim 3, wherein the rate of delivery of electric power to the batteries (102) of each of the speaker devices (100) is set at the charging device (300) such that the batteries (102) are fully charged within substantially the same time period.

5. A method according to any of claims 1 to 3, wherein operating the charging device (300) comprises:
charging the battery (102) of the speaker device (100) with the charging device (300) delivering electric energy such that the battery (102) is charged to a proportion of full charge of the battery (102) that is a function of the volume level of the speaker device (100).

6. A method according to claim 1, wherein the charging device (300) is in communication with two speaker devices (100) simultaneously, wherein operating the charging device (300) comprises:
causing electrical energy to be passed from the battery (102) of a first of the speaker devices (100) to the battery (102) of the second of the speaker devices (100) in the case that the volume level of the first speaker device (100) is at a lower level than the volume level of the second speaker device (100).

7. A charging device (300) for causing charging of a rechargeable battery (102) of a speaker device (100), the charging device (300) comprising:
data storage for storing data relating to a volume level that is set for playback of audio by a speaker device (100), the charging device (300) being configured to receive said data;
the charging device (300) being constructed and arranged to cause charging of the battery (102) of said speaker device (100) in accordance with the stored data relating to the volume level.

8. A charging device (300) according to claim 7, wherein the charging device (300) is constructed and arranged to charge the battery (102) of said speaker device (100) by delivering electric energy to the battery (102) of said speaker device (100) at a rate that that is a function of the volume level of said speaker device (100).

9. A charging device (300) according to claim 8, wherein the charging device (300) is constructed and arranged to charge the batteries (102) of two speaker devices (100) simultaneously, the charging device (300) being configured to deliver electric energy to the batteries (102) of each of said speaker devices (100) at respective rates that are a function of the volume level of the respective speaker devices (100).

10. A charging device (300) according to claim 9, wherein the charging device (300) is configured such that the rate of delivery of electric power to the batteries (102) of each of said speaker devices (100) is set such that said batteries (102) are fully charged within substantially the same time period.

11. A charging device (300) according to any of claims 7 to 9, wherein the charging device (300) is configured to charge the battery (102) of said speaker device (100) by delivering electric energy such that the battery (102) is charged to a proportion of full charge of the battery (102) that is a function of the volume level of said speaker device (100).

12. A charging device (300) according to claim 7, wherein the charging device (300) is configured to cause electrical energy to be passed from the battery (102) of a first of said speaker devices (100) to the battery (102) of the second of said speaker devices (100) in the case that the volume level of said first speaker device (100) is at a lower level than the volume level of said second speaker device (100).

13. A charging device (300) according to any of claims 7 to 12, wherein the charging device (300) comprises an interface that is configured to receive said data relating to a volume level from a media player.

14. A charging device (300) according to any of claims 7 to 13, comprising:
an audio output interface for transmitting audio signals to said speaker device (100) or said speaker devices (100) for play back of audio by said speaker device (100) or said speaker devices (100);
an interface that is configured to receive an input from a user to set a volume level for play back of the audio by a said speaker device (100);
wherein said data relating to a volume level corresponds to the volume level received at the interface.

15. A charging device (300) according to any of claims 7 to 14, wherein the charging device (300) comprises an interface that is configured to receive said data relating to a volume level as a manual input by a user.

## Patentansprüche

1. Verfahren zum Laden einer wiederaufladbaren Batterie (102) einer Lautsprechervorrichtung (100), wobei das Verfahren umfasst:
Empfangen von Daten an einem Ladegerät (300), die auf einen für die Audiowiedergabe durch die Lautsprechervorrichtung (100) eingestellten Lautstärkepegel bezogen sind;
Speichern der auf den für die Audiowiedergabe durch die Lautsprechervorrichtung (100) eingestellten Lautstärkepegel bezogenen Daten an dem Ladegerät (300); und
Betreiben des Ladegeräts (300), um das Laden der Batterie (102) der Lautsprechervorrichtung (100) gemäß den auf den Lautstärkepegel bezogenen gespeicherten Daten zu bewirken.

2. Verfahren nach Anspruch 1, wobei das Betreiben des Ladegeräts (300) umfasst:
Laden der Batterie (102) der Lautsprechervorrichtung (100) mit dem Ladegerät (300), das elektrische Energie an die Batterie (102) mit einer Rate liefert, die eine Funktion des Lautstärkepegels der Lautsprechervorrichtung (100) ist.

3. Verfahren nach Anspruch 2, wobei das Ladegerät (300) so ausgestaltet ist, dass es die Batterien (102) von zwei Lautsprechervorrichtungen (100) gleichzeitig auflädt, wobei das Ladegerät (300) elektrische Energie an die Batterien (102) der Lautsprechervorrichtungen (100) mit entsprechenden Raten liefert, die eine Funktion des Lautstärkepegels der jeweiligen Lautsprechervorrichtungen (100) sind.

4. Verfahren nach Anspruch 3, wobei die Rate der Abgabe elektrischer Energie an die Batterien (102) jeder der Lautsprechervorrichtungen (100) an dem Ladegerät (300) so eingestellt ist, dass die Batterien (102) im Wesentlichen innerhalb des gleichen Zeitraums vollständig geladen werden.

5. Verfahren nach einem der Ansprüche 1 bis 3, wobei das Betreiben des Ladegeräts (300) umfasst:
Laden der Batterie (102) der Lautsprechervorrichtung (100) mit dem Ladegerät (300), das elektrische Energie so liefert, dass die Batterie (102) bis zu einem Anteil der vollen Ladung der Batterie (102) geladen wird, der eine Funktion des Lautstärkepegels der Lautsprechervorrichtung (100) ist.

6. Verfahren nach Anspruch 1, wobei das Ladegerät (300) gleichzeitig mit zwei Lautsprechervorrichtungen (100) in Verbindung steht, wobei das Betreiben des Ladegeräts (300) umfasst:
Veranlassen, dass elektrische Energie von der Batterie (102) einer ersten der Lautsprechervorrichtungen (100) an die Batterie (102) der zweiten der Lautsprechervorrichtungen (100) weitergeleitet wird, falls der Lautstärkepegel der ersten Lautsprechervorrichtung (100) auf einem niedrigeren Pegel ist als der Lautstärkepegel der zweiten Lautsprechervorrichtung (100).

7. Ladegerät (300) zum Veranlassen eines Aufladens einer wiederaufladbaren Batterie (102) einer Lautsprechervorrichtung (100), wobei das Ladegerät (300) umfasst:
einen Datenspeicher zum Speichern von Daten, die sich auf einen für die Audiowiedergabe durch eine Lautsprechervorrichtung (100) eingestellten Lautstärkepegel beziehen, wobei das Ladegerät (300) zum Empfangen der Daten ausgestaltet ist;
wobei das Ladegerät (300) so konstruiert und angeordnet ist, dass es das Laden der Batterie (102) der Lautsprechervorrichtung (100) in Übereinstimmung mit den auf den Lautstärkepegel bezogenen gespeicherten Daten bewirkt.

8. Ladegerät (300) nach Anspruch 7, wobei das Ladegerät (300) so konstruiert und angeordnet ist, dass es die Batterie (102) der Lautsprechervorrichtung (100) auflädt, indem es elektrische Energie an die Batterie (102) der Lautsprechervorrichtung (100) mit einer Rate abgibt, die eine Funktion des Lautstärkepegels der Lautsprechervorrichtung (100) ist.

9. Ladegerät (300) nach Anspruch 8, wobei das Ladegerät (300) so konstruiert und angeordnet ist, dass es die Batterien (102) von zwei Lautsprechervorrichtungen (100) gleichzeitig lädt, wobei das Ladegerät (300) so konfiguriert ist, dass es elektrische Energie an die Batterien (102) jeder der Lautsprechervorrichtungen (100) mit entsprechenden Raten liefert, die eine Funktion des Lautstärkepegels der jeweiligen Lautsprechervorrichtungen (100) sind.

10. Ladegerät (300) nach Anspruch 9, wobei das Ladegerät (300) so konfiguriert ist, dass die Rate der Abgabe elektrischer Energie an die Batterien (102) jeder der Lautsprechervorrichtungen (100) so eingestellt ist, dass die Batterien (102) im Wesentlichen innerhalb desselben Zeitraums vollständig geladen werden.

11. Ladegerät (300) nach einem der Ansprüche 7 bis 9, wobei das Ladegerät (300) so konfiguriert ist, dass es die Batterie (102) der Lautsprechervorrichtung (100) durch Abgabe elektrischer Energie so auflädt, dass die Batterie (102) zu einem Anteil der vollen Ladung der Batterie (102) geladen wird, der eine Funktion des Lautstärkepegels der Lautsprechervorrichtung (100) ist.

12. Ladegerät (300) nach Anspruch 7, wobei das Ladegerät (300) so konfiguriert ist, dass elektrische Energie von der Batterie (102) einer ersten der Lautsprechervorrichtungen (100) an die Batterie (102) der zweiten der Lautsprechervorrichtungen (100) weitergeleitet wird, wenn der Lautstärkepegel der ersten Lautsprechervorrichtung (100) auf einem niedrigeren Pegel ist als der Lautstärkepegel der zweiten Lautsprechervorrichtung (100).

13. Ladegerät (300) nach einem der Ansprüche 7 bis 12, wobei das Ladegerät (300) eine Schnittstelle umfasst, die so konfiguriert ist, dass sie die auf einen Lautstärkepegel bezogenen Daten von einem Mediaplayer empfängt.

14. Ladegeräte (300) nach einem der Ansprüche 7 bis 13, umfassend:
eine Audioausgabeschnittstelle zum Übertragen von Audiosignalen an die Lautsprechervorrichtung (100) oder die Lautsprechervorrichtungen (100) zur Wiedergabe von Audio durch die Lautsprechervorrichtung (100) oder die Lautsprechervorrichtungen (100);
eine Schnittstelle, die so konfiguriert ist, dass sie eine Eingabe von einem Benutzer empfängt, um einen Lautstärkepegel für die Wiedergabe des Audios durch die Lautsprechervorrichtung (100) einzustellen;
wobei die sich auf einen Lautstärkepegel beziehenden Daten dem an der Schnittstelle empfangenen Lautstärkepegel entsprechen.

15. Ladegerät (300) nach einem der Ansprüche 7 bis 14, wobei das Ladegerät (300) eine Schnittstelle umfasst, die so konfiguriert ist, dass sie die auf einen Lautstärkepegel bezogenen Daten als manuelle Eingabe durch einen Benutzers empfängt.

## Revendications

1. Procédé de charge d'une batterie rechargeable (102) d'un dispositif de haut-parleur (100), le procédé consistant à :
recevoir, au niveau d'un dispositif de charge (300), des données relatives à un niveau de volume qui est réglé pour une lecture audio par le dispositif de haut-parleur (100) ;
stocker, au niveau du dispositif de charge (300), lesdites données relatives au niveau de volume qui est réglé pour la lecture audio par le dispositif de haut-parleur (100) ; et
faire fonctionner le dispositif de charge (300) pour provoquer la charge de la batterie (102) du dispositif de haut-parleur (100) selon les données stockées relatives au niveau de volume.

2. Procédé selon la revendication 1, dans lequel le fonctionnement du dispositif de charge (300) consiste à :
charger la batterie (102) du dispositif de haut-parleur (100) à l'aide du dispositif de charge (300) qui délivre de l'énergie électrique à la batterie (102) à un taux qui est fonction du niveau de volume du dispositif de haut-parleur (100).

3. Procédé selon la revendication 2, dans lequel le dispositif de charge (300) est agencé pour charger simultanément les batteries (102) de deux dispositifs de haut-parleur (100) à l'aide du dispositif de charge (300) qui délivre de l'énergie électrique aux batteries (102) des dispositifs de haut-parleur (100) à des taux respectifs qui sont fonction du niveau de volume des dispositifs de haut-parleur respectifs (100).

4. Procédé selon la revendication 3, dans lequel le taux de délivrance d'énergie électrique aux batteries (102) de chacun des dispositifs de haut-parleur (100) est réglé au niveau du dispositif de charge (300) de telle sorte à avoir les batteries (102) complètement chargées dans un laps de temps sensiblement identique.

5. Procédé selon l'une quelconque des revendications 1 à 3, dans lequel le fonctionnement du dispositif de charge (300) consiste à :
charger la batterie (102) du dispositif de haut-parleur (100) à l'aide du dispositif de charge (300) qui délivre de l'énergie électrique de telle sorte à avoir la batterie (102) chargée à une proportion de charge complète de la batterie (102) qui est fonction du niveau de volume du dispositif de haut-parleur (100).

6. Procédé selon la revendication 1, dans lequel le dispositif de charge (300) est simultanément en communication avec deux dispositifs de haut-parleur (100), dans lequel le fonctionnement du dispositif de charge (300) consiste à :
provoquer le passage de l'énergie électrique de la batterie (102) d'un premier des dispositifs de haut-parleur (100) à la batterie (102) du deuxième des dispositifs de haut-parleur (100), dans le cas où le niveau de volume du premier dispositif de haut-parleur (100) est à un niveau inférieur à celui du niveau de volume du deuxième dispositif de haut-parleur (100).

7. Dispositif de charge (300) destiné à provoquer la charge d'une batterie rechargeable (102) d'un dispositif de haut-parleur (100), le dispositif de charge (300) comprenant :
un stockage de données destiné à stocker des données relatives à un niveau de volume qui est réglé pour une lecture audio par un dispositif de haut-parleur (100), le dispositif de charge (300) étant configuré pour recevoir lesdites données,
le dispositif de charge (300) étant construit et agencé pour provoquer la charge de la batterie (102) dudit dispositif de haut-parleur (100) selon les données stockées relatives au niveau de volume.

8. Dispositif de charge (300) selon la revendication 7, dans lequel le dispositif de charge (300) est construit et agencé pour charger la batterie (102) dudit dispositif de haut-parleur (100) en délivrant de l'énergie électrique à la batterie (102) dudit dispositif de haut-parleur (100) à un taux qui est fonction du niveau de volume dudit dispositif de haut-parleur (100).

9. Dispositif de charge (300) selon la revendication 8, dans lequel le dispositif de charge (300) est construit et agencé pour charger simultanément les batteries (102) de deux dispositifs de haut-parleur, le dispositif de charge (300) étant configuré pour délivrer de l'énergie électrique aux batteries (102) de chacun desdits dispositifs de haut-parleur (100) à des taux respectifs qui sont fonction du niveau de volume des dispositifs de haut-parleur respectifs (100).

10. Dispositif de charge (300) selon la revendication 9, dans lequel le dispositif de charge (300) est configuré de telle sorte à avoir le taux de délivrance d'énergie électrique aux batteries (102) de chacun desdits dispositifs de haut-parleur (100) réglé de telle sorte à avoir lesdites batteries (102) complètement chargées dans un laps de temps sensiblement identique.

11. Dispositif de charge (300) selon l'une quelconque des revendications 7 à 9, dans lequel le dispositif de charge (300) est configuré pour charger la batterie (102) dudit dispositif de haut-parleur (100) en délivrant de l'énergie électrique de telle sorte à avoir la batterie (102) chargée à une proportion de charge complète de la batterie (102) qui est fonction du niveau de volume dudit dispositif de haut-parleur (100).

12. Dispositif de charge (300) selon la revendication 7, dans lequel le dispositif de charge (300) est configuré pour provoquer le passage de l'énergie électrique de la batterie (102) d'un premier desdits dispositifs de haut-parleur (100) à la batterie (102) du deuxième desdits dispositifs de haut-parleur (100), dans le cas où le niveau de volume dudit premier dispositif de haut-parleur (100) est à un niveau inférieur à celui du niveau de volume dudit deuxième dispositif de haut-parleur (100).

13. Dispositif de charge (300) selon l'une quelconque des revendications 7 à 12, dans lequel le dispositif de charge (300) comprend une interface qui est configurée pour recevoir lesdites données relatives à un niveau de volume provenant d'un lecteur multimédia.

14. Dispositif de charge (300) selon l'une quelconque des revendications 7 à 13, comprenant
une interface de sortie audio destinée à transmettre des signaux audio audit dispositif de haut-parleur (100) ou auxdits dispositifs de haut-parleur (100) pour une lecture audio par ledit dispositif de haut-parleur (100) ou par lesdits dispositifs de haut-parleur (100) ;
une interface qui est configurée pour recevoir une entrée d'un utilisateur afin de régler un niveau de volume pour la lecture audio par ledit dispositif de haut-parleur (100),
dans lequel lesdites données relatives à un niveau de volume correspondent au niveau de volume reçu au niveau de l'interface.

15. Dispositif de charge (300) selon l'une quelconque des revendications 7 à 14, dans lequel le dispositif de charge (300) comprend une interface qui est configurée pour recevoir lesdites données relatives à un niveau de volume sous la forme d'une entrée manuelle par un utilisateur.
